# EUROPEAN PATENT SPECIFICATION

(11) **EP 0 440 592 B1**
(45) Date of publication and mention of the grant of the patent: **06.07.1994**
(21) Application number: 91850020.8
(22) Date of filing: 01.02.1991
(51) Int. Cl.: B62D 21/20

(54) **Chassis for a trailer**
Untergestell für einen Anhänger
Châssis pour remorque

(30) Priority: 01.02.1990 SE 9000364
(43) Date of publication of application: 07.08.1991
(73) Proprietor: GISEBO VAGNINDUSTRI AB, S-552 71 Jönköping (SE)
(72) Inventor: Sers, Ove, S-552 71 Jönköping (SE)
(74) Representative: Jörneld, Bo

(56) References cited:
- EP-A- 0 162 292
- FR-A- 2 478 568
- FR-A- 2 537 530
- SE-A- 8 702 661
- US-A- 3 266 836
- US-A- 3 580 593

## Description

### Technical Field

The present invention relates to trailers of the kind which can be connected to private automobiles. The invention relates more specifically to a chassis for such a trailer, said chassis comprising a towing arm by means of which the trailer can be coupled to the towing vehicle and which comprises two beams which converge mutually towards the coupling position. The chassis also comprises a frame structure supporting a platform or floor on which a secondary load-carrying beam can be mounted, this beam functioning as an attachment means for the trailer wheels.

### Background Art

Trailers which comprise chassis of this kind are known to the art from for instance Swedish Patent Application SE-A-8702661. Such known trailers are constructed from a relatively large number of components which renders the manufacture and work of assembling strenous. Naturally, this means that such trailers are expensive. Another pronounced drawback is that the trailers, comprised of their many components, are heavy, despite efforts to keep the total weight of tine trailer low, by making some of the components thinner.

An important advantage is afforded by the chassis construction taught by the aforesaid patent application, in the distribution of load achieved by means of the so-called primary and secondary beams. The platform of this known construction, however, is relatively high above ground level, which can be troublesome in certain applications.

### Disclosure of the Invention

With the intention of avoiding the aforesaid drawbacks, the object of the present invention is to decrease the number of structural components in the chassis without losing the advantage afforded by load distribution. This is achieved in that the mutually opposing and mutually parallel longitudinally extending sides of the chassis are formed by the towing arm beams which are connected to a substantially oval bottom profile which carries a transversally extending end beam at the rear end of the chassis.

### Description of Preferred Embodiments

The inventive chassis will now be described in more detail with reference to the accompanying drawings, in which
Fig. 1 is a perspective view of a first, preferred embodiment of an inventive chassis;
Fig. 2 is a perspective view of a second preferred embodiment of the inventive chassis;
Fig. 3 is a top view of the chassis illustrated in Fig. 1 and having side boards mounted thereon;
Fig. 4 illustrates a towing arm beam for the chassis illustrated in Figs. 1 and 3;
Fig. 5 is a top view of the chassis illustrated in Fig. 2 and having side boards mounted thereon;
Fig. 6 illustrates a front beam for the chassis shown in Figs. 2 and 5;
Fig. 7 is a sectional view taken on the line VII-VII in Fig. 3 or Fig. 5; and
Fig. 8 is an end view of the U-shaped end beam of the preferred embodiments of the inventive chassis.

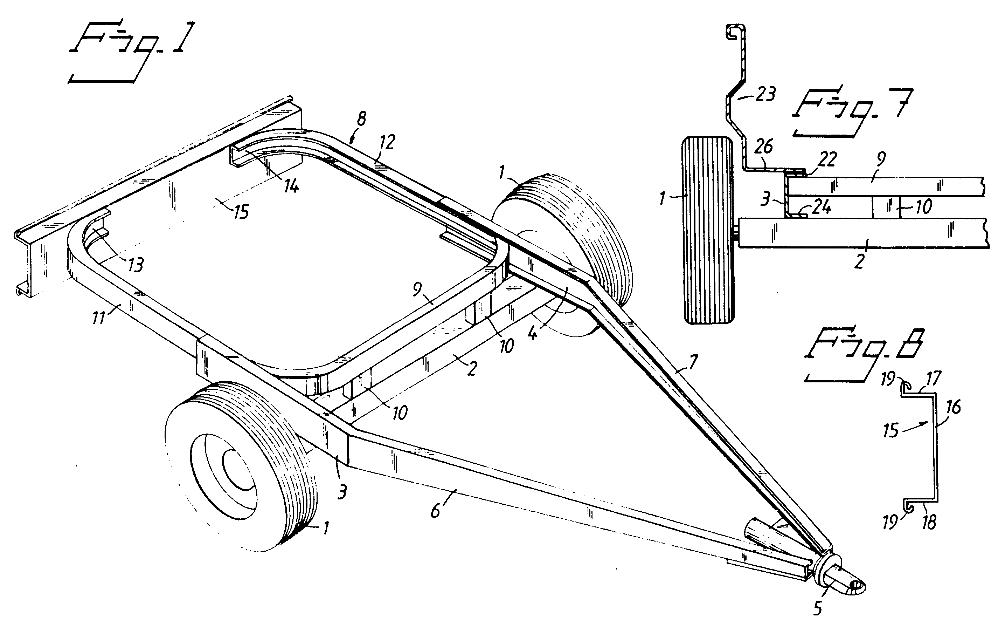

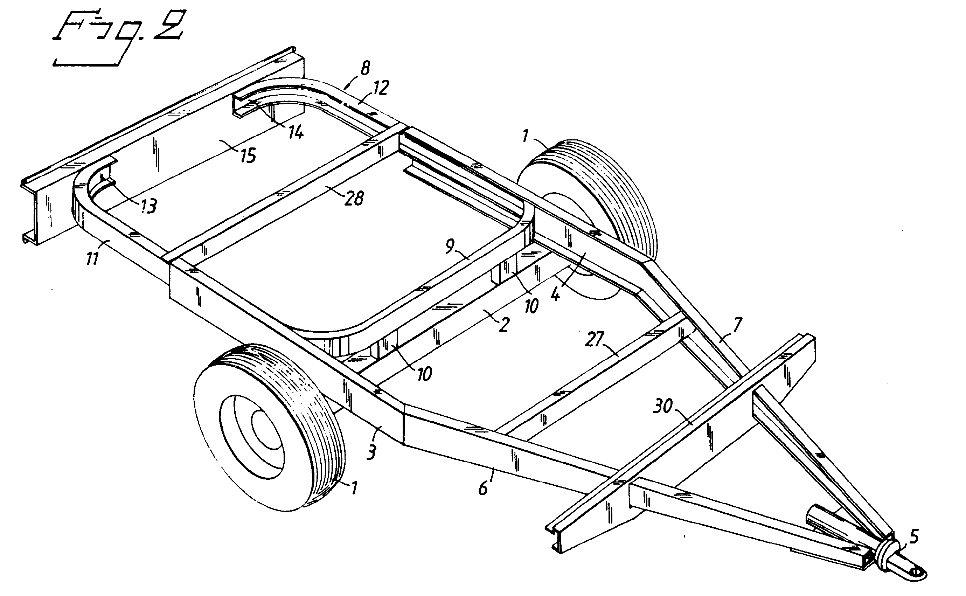

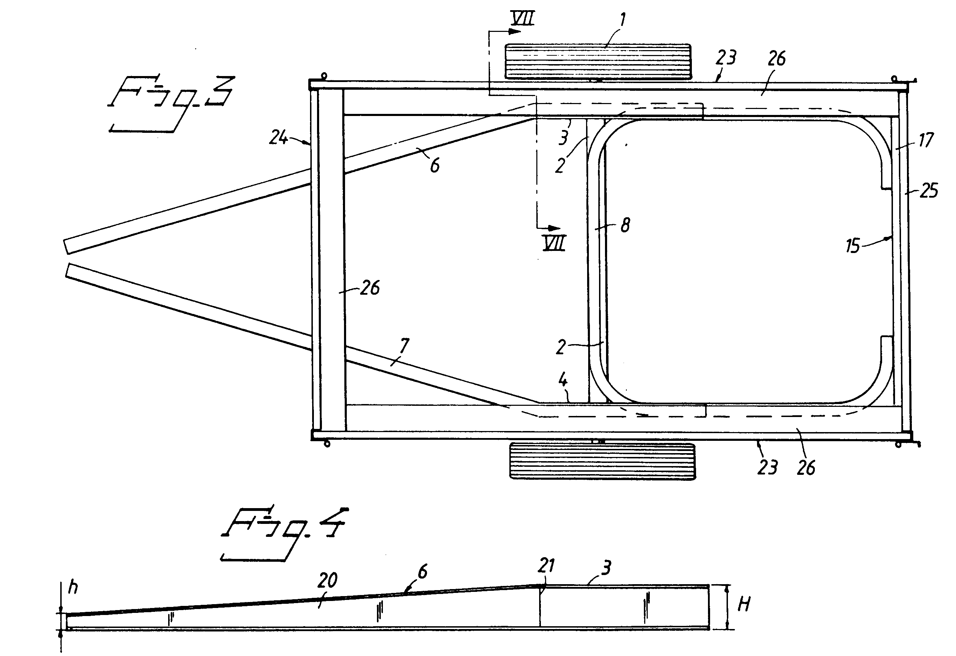

In Figs. 1 and 3 there is shown a preferred embodiment of an inventive chassis intended for a small trailer. The chassis is shown resting on a pair of wheels 1, journalled on an axle which forms a secondary load-carrying beam 2. It will be understood, however, that the wheel arrangement illustrated in Figs. 1 and 3, and in the following Figures, does not limit the scope of the invention but is merely intended to illustrate the positioning of the wheels. Various types of wheel suspensions are conceivable, for instance bogie-type suspensions.

The chassis comprises a frame structure which includes two mutually opposing and mutually parallel long sides 3, 4 which extend in the longitudinal direction of the chassis. The long sides 3, 4 merge directly with a towing arm by means of which the trailer can be coupled to the towing vehicle (not shown) at its coupling position where a coupling device 5, known per se, is provided. The towing arm thus comprises a pair of beams 6, 7 which converge mutually towards the coupling position and which carry the coupling device 5. The beams 6, 7 merge with the parallel long sides 3, 4 in a direction towards the secondary beam 2. The "free" ends of the towing arm beams 6, 7 located rearwardly of the secondary load-carrying beam 2 carry a substantially oval load-supporting bottom profile 8. This oval bottom profile 8 is thus included in the frame structure of the chassis and extends rearwardly from the secondary beam 2.

The substantially oval bottom profile 8 includes a part which extends parallel with and above the secondary beam 2. This part forms a primary load-carrying beam 9 which normally takes up the load (not shown) placed on the trailer. The primary beam 9 is connected to the secondary beam 2 through the intermediary of a load distributor 10, Fig. 7. Such load distributors 10 are known per se from Swedish Patent Application No. 8702661-3 and function to directly transfer the load acting on the trailer platform, particularly when the load exceeds a predetermined limit.

The substantially oval bottom profile 8 also comprises two sides 11, 12 which are mutually parallel in the longitudinal extension of the chassis and which form a continuation of the long sides 3, 4 of the towing arm beams 6, 7. The parallel sides 11, 12 are terminated with mutually facing legs 13, 14. As will be seen from the Figures, these legs terminate in spaced relationship with one another, such that the substantially oval bottom profile 8 will be open rearwardly as seen in the longitudinal extension of the chassis.

The mutually facing legs 13, 14 carry an end beam 15. As shown in Fig. 8, the end beam 15 has a U-shaped cross-section. The web part 16 of the end beam 15 faces towards the trailer coupling device 5, whereas the flanges 17, 18 of said end beam extend rearwardly and are advantageously terminated with a stiffening fold 19. The space defined between the flanges 17, 18 of the end beam 15 form a convenient chamber for carrying vehicle lights, vehicle registration plates, etc. The upper flange 17 can be used as a transverse supporting surface for supporting a chassis platform (not shown) which can be placed loosely on the chassis, with the fold 19 forming a natural stop means which prevents the platform from sliding rearwardly. The fold 19 will also form a wear protector which functions to prevent the platform or flooring from being torn up. The lower flange 18 with its fold 19 provides an effective bumper device.

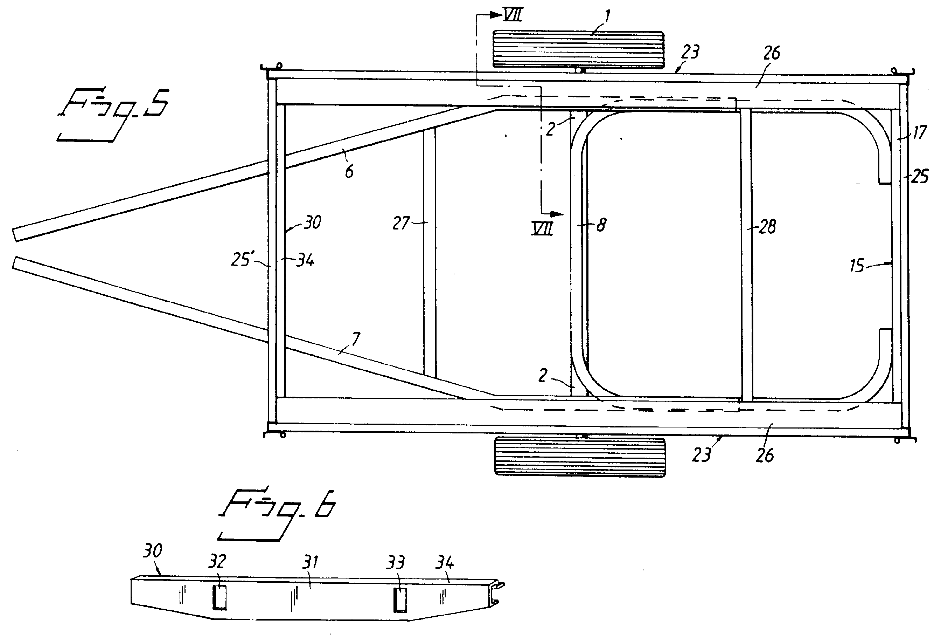

As mentioned in the aforegoing, the towing arm comprises two beams 6, 7. One of these beams, the beam 6, is shown in Fig. 4, from which it will be seen that the beam has a U-shaped cross-section and a web 20 whose height increases continuously from h at the device 5 (Figs. 1 and 3) to H at the aforesaid "free" end. The transition between the part which converges towards the opposite towing arm beam 7 and the parallel long side 3 is referenced 21 in the Figure. The other towing arm beam 7 has a similar configuration, wherein the flanges of the two beams 6, 7 are faced towards one another when assembling the chassis.

As will be seen from Fig. 7, the substantially oval bottom profile 8 is supported by the towing arm beams 6, 7 in the immediate proximity of their upper flanges 22 (only the long side 3 of the beam 6 and the primary load-carrying beam 9 of the bottom profile 8 are shown in Fig. 7). An advantage is afforded when the bottom profile 8 is also given a U-shaped cross-section, with the flanges of said section facing towards the centre of the oval. In this case, the vertical extension of the web of said bottom profile 8 is smaller than the vertical extension of the web of the long side 3. The side of the lower flange 24 on the long sides 3, 4 of the towing arm beams facing towards the ground carries the secondary load-carrying beam 2. The upwardly facing surface of the upper flange 22 of the beams 6, 7 is advantageously used as a support for a platform or some other chassis superstructure, for instance a sideboard 23, as illustrated in Fig. 7.

As indicated with reference to Fig. 7, the chassis may be equipped with various superstructures, according to the intended use of the trailer. In Fig. 3 the chassis is provided with sideboards 23 and a corresponding frontboard 24. The tailboard 25 is pivotally mounted and the sideboards and frontboards 23, 24 have horizontal surfaces 26 by means of which the boards are attached to the chassis frame structure and which are able to function as platform supports together with the upper flange 17 of the end beam 15.

Figs. 2 and 5 illustrate a second preferred embodiment of the inventive chassis, this chassis being intended for a larger trailer. Those components which correspond to the components of the aforedescribed chassis for smaller trailers have been identified with the same reference signs.

The chassis frame of the second embodiment also includes the towing arm beams 6, 7 and the oval bottom profile 8. Because the chassis of this embodiment will have a greater length than the aforedescribed chassis, it may be appropriate to include bracing bars which in the illustrated embodiment are exemplified by such a bracing bar 27 mounted between the towing arm beams 6, 7 in front of the secondary beam 2, and a similar bracing bar 28 mounted centrally in the oval bottom profile 8, between its parallel sides 11, 12. An important modification of the chassis of said second embodiment resides in the inclusion of a front beam 30 through which the two towing arm beams 6, 7 extend.

The front beam 30 is illustrated in Fig. 6 and has a substantially U-shaped cross-section. Formed in the web 31 of the front beam 30 are two openings 32, 33 which accommodate the towing arm beams 6, 7, these openings having been for example punched in the beam. The upper flange 34 of the front beam 30 can be used to support a platform or some other structure.

As will be seen from Fig. 5, the frontboard 25′ is mounted above the front beam 30 and is pivotally attached in a manner similar to the tailboard 25. Despite its large load-carrying area, the chassis according to this second embodiment is highly stable and has good loading capacity.

Although the invention has been described in more detail with reference to embodiments at present preferred and illustrated in the accompanying drawings, it will be understood that the invention is not limited to these embodiments and that modifications can be made within the scope of the following claims. For instance, the chassis for smaller trailers can also be provided with one or more bracing bars 28 and a front beam 30, and similarly the chassis for larger trailers need not necessarily be provided with such parts.

## Claims

1. A chassis intended for a trailer of the kind which at its forward end has a towing arm which can be coupled to a towing vehicle and which includes two beams (6,7) which converge towards the coupling position (5), wherein the chassis includes a frame structure for supporting a platform or floor and for mounting a secondary load-carrying beam (2) which is arranged to form means for mounting the wheels (1) of the trailer, characterized in that the mutually opposing and mutually parallel long sides (3,4) of the frame structure extending in the longitudinal direction of the chassis are comprised of the towing arm beams (6,7), said beams being connected to a substantially oval load-carrying bottom profile (8) which supports a transverse end beam (15) at the rear end of the chassis.

2. A chassis according to claim 1, characterized in that the substantially oval bottom profile (8) extends forwardly to a position above the secondary load-bearing beam (2) and forms a primary load-bearing beam (9) which is arranged to be connected with the secondary load-bearing beam through the intermediary of one or more load distributors (10).

3. A chassis according to claim 1 or 2, characterized in that the substantially oval bottom profile (8) is open at its rear end, the legs (13,14) thus formed being fixed to the transverse end beam (15).

4. A chassis according to claim 1 or 3, characterized in that the transverse end beam (15) has a substantially U-shaped cross-section, wherein the free legs (17,18) are provided with stiffening folds (19) and the upwardly facing surface of the upper leg (17) forms a support for the platform or floor which is loosely mounted on the chassis, and wherein the stiffening fold on said leg forms a platform or floor stop means, whereas the inwardly located web side (16) of the transverse beam is arranged to carry trailer lights, vehicle registration plates and the like.

5. A chassis according to claim 1, characterized in that the beams (6,7) converging towards the coupling position (5) are accommodated in openings (32,33) punched in a front beam (30) which is included in the chassis frame structure for supporting said platform or floor.

6. A chassis according to any one of the preceding claims, characterized by floor sideboards (23,24) which are mounted directly on the frame structure formed by the towing arm beams (6,7) and the oval bottom profile (8).

7. A chassis according to any one of the preceding claims, characterized in that each of the towing arm beams (6,7) has a U-shaped cross-section, and in that the width (h,H) of the web (20) of each beam increases continuously from the coupling position (5) to the position of attachment of the substantially oval bottom profile (Fig. 4).

## Patentansprüche

1. Fahrgestell für einen Anhänger, der an seinem vorderen Ende einen Zugarm aufweist, welcher an ein Zugfahrzeug kuppelbar ist und zwei zur Kupplungsstelle (5) hin zusammenlaufende Streben (6, 7) umfaßt, wobei das Fahrgestell ein Rahmenwerk zur Unterstützung einer Plattform oder eines Bodens sowie zur Befestigung eines lasttragenden Sekundärholmes (2) umfaßt, an welchem die Räder (1) des Anhängers befestigbar sind, dadurch gekennzeichnet, daß die einander gegenüberliegenden und zueinander parallelen Längsseiten (3, 4) des sich in Längsrichtung des Fahrgestelles erstreckenden Rahmenwerkes ein Teil der Zugarmstreben (6, 7) sind, wobei diese Streben mit einem im wesentlichen ovalen lasttragenden Grundprofil (8) verbunden sind, welches am hinteren Ende des Fahrgestells einen Querendbalken (15) trägt.

2. Fahrgestell nach Patentanspruch 1, dadurch gekennzeichnet, daß sich das im wesentlichen ovale Grundprofil (8) nach vorne bis zu einer Position oberhalb des lasttragenden Sekundärholmes (2) erstreckt und einen lasttragenden Primärholm (9) bildet, der unter Vermittlung eines oder mehrerer Lastverteiler (10) mit dem lasttragenden Sekundärholm verbindbar ist.

3. Fahrgestell nach Patentanspruch 1 oder 2, dadurch gekennzeichnet, daß das im wesentlichen ovale Grundprofil (8) an seinem hinteren Ende offen ist und die so gebildeten Schenkel (13, 14) mit den Querendbalken (15) verbunden sind.

4. Fahrgestell nach Patentanspruch 1 oder 3, dadurch gekennzeichnet, daß der Querendbalken (15) einen im wesentlichen U-förmigen Querschnitt aufweist, wobei die freien Schenkel (17, 18) mit Versteifungsfalzen (19) versehen sind und die nach oben gerichtete Fläche des oberen Schenkels (17) eine Auflage für die lose auf dem Fahrgestell montierte Plattform oder den Boden bildet und der auf dem oberen Schenkel befindliche Versteifungsfalz einen Anschlag für die Plattform oder den Boden darstellt, während der nach innen gerichtete Steg (16) des Querträgers zur Aufnahme von Anhängerleuchten, Fahrzeugregistriertafeln u.dgl. angeordnet ist.

5. Fahrgestell nach Patentanspruch 1, dadurch gekennzeichnet, daß die zur Kupplungsstelle (5) zusammenlaufenden Streben (6, 7) in Öffnungen (32, 33) gelagert sind, die in einem Frontträger (30) ausgenommen sind, welcher zum Rahmenwerk des Fahrgestells zur Unterstützung der Plattform oder des Bodens gehört.

6. Fahrgestell nach einem der vorhergehenden Patentansprüche, gekennzeichnet durch Seitenwände (23, 24), die direkt auf dem durch die Zugarmstreben (6, 7) und das ovale Grundprofil (8) gebildeten Rahmenwerk montiert sind.

7. Fahrgestell nach einem der vorhergehenden Patentansprüche, dadurch gekennzeichnet, daß jede der Zugarmstreben (6, 7) U-förmigen Querschnitt aufweist und daß die Breite (h, H) des Steges (20) jeder Strebe von der Kupplungsstelle (5) bis zur Befestigungsstelle des im wesentlichen ovalen Grundprofils kontinuierlich zunimmt (Fig. 4).

## Revendications

1. Châssis pour remorque de la catégorie qui présente à son extrémité avant une barre d'attelage capable d'être accouplée à un véhicule remorqueur et comportant deux bras (6, 7) qui convergent vers la position d'attelage (5), dans lequel le châssis comprend une structure de cadre destinée à supporter une plate-forme ou plancher et à monter une barre secondaire porteuse de charge (2), agencée pour former un moyen de montage des roues (1) de la remorque, caractérisé en ce que les longs côtés parallèles entre eux et face à face (3, 4) de la structure de cadre, s'étendant dans la direction longitudinale du châssis, sont constitués par les bras (6, 7) de la barre d'attelage, lesdits bras étant reliés à un profilé inférieur, porteur de charge sensiblement ovale (8) qui supporte une barre transversale d'extrémité (15) à l'arrière du châssis.

2. Châssis selon la revendication 1, caractérisé en ce que le profilé, sensiblement ovale (8) se prolonge en avant jusqu'à une position située au-dessus de la barre secondaire (2) porteuse de charge et forme une barre primaire (9) porteuse de charge qui est agencée pour être reliée à la barre secondaire porteuse de charge par l'intermédiaire d'une ou plusieurs répartiteurs de charge (10).

3. Châssis selon la revendication 1 ou 2, caractérisé en ce que le profilé inférieur (8), sensiblement ovale, est ouvert à son extrémité arrière, les bras (13, 14) ainsi formés étant fixés à la barre transversale d'extrémité (15).

4. Châssis selon la revendication 1 ou 3, caractérisé en ce que la barre transversale d'extrémité (15) a une section transversale sensiblement en forme de U, dont les côtés libres (17, 18) portent des replis raidisseurs (19) et la surface, orientée vers le haut du côté supérieur (17) constitue un support pour la plate-forme ou le plancher qui est posé librement sur le châssis, et dans lequel le repli raidisseur dudit côté sert de moyen de butée pour la plate-forme ou le plancher, tandis que la partie centrale latérale (16) orientée vers l'intérieur de la barre transversale est agencée pour supporter des feux de la remorque, des plaques d'immatriculation du véhicule et analogues.

5. Châssis selon la revendication 1, caractérisé en ce que les bras (6, 7) convergeant vers la position d'attelage (5) sont reçus dans des ouvertures (32, 33) découpées par emboutissage dans une barre avant (30), qui est prévue dans la structure du cadre du châssis pour supporter ladite plate-forme ou ledit plancher.

6. Châssis selon l'une quelconque des revendications précédentes, caractérisé par des planches latérales (23, 24) qui sont montées directement sur la structure du cadre formé par les bras (6, 7) de la barre d'attelage et le profilé inférieur ovale (8)

7. Châssis selon l'une quelconque des revendications précédentes, caractérisé en ce que chacun des bras (6, 7) de la barre d'attelage a une section transversale en forme de U, et en ce que la largeur (h, H) de la partie principale (20) de chaque bras augmente en continu depuis la position d'attelage (5) jusqu'à la position de fixation du profilé inférieur sensiblement ovale (figure 4).
